# EUROPEAN PATENT APPLICATION

(11) **EP 1 225 783 A1**
(43) Date of publication of application: **24.07.2002**
(21) Application number: 00969981.0
(22) Date of filing: 23.10.2000
(51) Int. Cl.: H04Q 9/00

(54) **REMOTE-CONTROLLED AUDIO RESPONSE SYSTEM AND REMOTE-CONTROLLED AUDIO RESPONSE DEVICE**

(30) Priority: 29.10.1999 JP 30878099
(71) Applicant: Daikin Industries, Ltd., Osaka-shi, Osaka 530-8323 (JP)
(72) Inventor: OKA, Seiji, Shiga-seisakusho of Daikin Ind. Ltd., Kusatsu-shi, Shiga 525-0044 (JP); OHMAE, Hiroshi, Shiga-seisakusho of Daikin Ind Ltd, Kusatsu-shi, Shiga 525-0044 (JP)
(74) Representative: HOFFMANN - EITLE
(86) International application number: JP0007370
(87) International publication number: WO0133894

(57) **Abstract**

In a remote control unit (1), a transmission part (14) transmits a remote control signal according to an input received from an input part (11). In an indoor unit (2), a reception part (21) receives the remote control signal sent from the transmission part (14) of the remote control unit (1), and a control part (22) controls a body of the indoor unit (2), based on the received remote control signal. In the remote control unit (1), a control part (12) selects a setting to be vocally outputted from an audio output part (24) of the indoor unit (2). Based on the selected content, a voice generation part (23) of the indoor unit (2) generates a voice indicating the selected setting, and the audio output part (24) outputs the voice. Thus, an audio response remote control system capable of easily confirming the setting by means of a voice and an audio response remote control device are provided.

## Description

### TECHNICAL FIELD

The present invention relates to an audio response remote control system and an audio response remote control device.

### BACKGROUND ART

Hitherto, as an audio response remote control system, there is known an air conditioner having a remote control unit. In the audio response remote control system, the remote control unit has a liquid crystal display for displaying settings such as an operation mode, a set temperature, and the like.

The audio response remote control system has a disadvantage that, when the remote control unit is operated in the dark, the content displayed on the liquid crystal display of the remote control unit cannot be seen, so that it is impossible to know the settings such as the operation mode, the set temperature, and the like. The audio response remote control device has another disadvantage that visually handicapped persons or eyesight-weakened persons have difficulty in confirming the setting displayed on the liquid crystal display.

### DISCLOSURE OF THE INVENTION

Therefore, it is an object of the present invention to provide an audio response remote control system allowing settings to be easily confirmed by means of a voice and an audio response remote control device which is used for the audio response remote control system.

In order to accomplish the above object, an audio response remote control system according to the present invention comprises a remote control device and a remote-controlled device remotely controlled by the remote control device, wherein the remote control device transmits a remote control signal according to an input, and the remote-controlled device is controlled by a received remote control signal and outputs a voice according to the remote control signal.

According to the audio response remote control system having the construction, the remote control device transmits a remote control signal according to an input. The remote-controlled device is controlled by the received remote control signal and outputs a voice according to the remote control signal. Therefore in the case where one cannot see a displayed content of the remote control unit in operating the remote control unit in the dark and in the case where a visually handicapped person or an eyesight-failed person have difficulty in confirming a displayed content, they can confirm the settings with a voice outputted from the remote-controlled device.

In one embodiment, the remote control device has an input part and a transmission part transmitting a remote control signal according to an input to the input part. And, the remote-controlled device has a reception part receiving the remote control signal sent from the transmission part of the remote control device, a control part controlling an operation of the remote-controlled device, based on the remote control signal received by the reception part, and an audio response part outputting a voice indicating a setting, according to the remote control signal sent from the transmission part of the remote control device.

In the audio response remote control system of the embodiment, when information is inputted to the input part through a push-button or the like, the transmission part transmits a remote control signal according to the input of the input part. In the remote-controlled device, the reception part receives the remote control signal sent from the transmission part of the remote control device. The control part controls the operation of the remote-controlled device, based on the received remote control signal. The audio response part outputs a voice indicating a setting, according to the remote control signal. For example, in an air conditioner having a remote control unit serving as the remote control device and an indoor unit serving as the remote controlled device, the indoor unit vocally outputs settings, such as an operation mode, a set temperature, a set air quantity, and the like as a voice, according to the remote control signal transmitted from the remote control unit. Thus, in the case where one cannot a displayed content on a liquid crystal display part of the remote control unit in operating the remote control unit in the dark and in the case where a visually handicapped person or an eyesight-failed person has difficulty in visually confirming settings displayed on the liquid crystal display part, they can confirm the settings by means of the voice outputted from the indoor unit.

In one embodiment, the remote control device has an audio response selection part for selecting a setting to be vocally outputted from the audio response part of the remote-controlled device, and based on a content selected by the audio response selection part, the audio response part of the remote-controlled device outputs a voice indicating the selected setting.

According to the audio response remote control system, the audio response selection part of the audio response remote control device selects a setting to be vocally outputted from the audio response part of the remote-controlled device. The audio response part of the remote-controlled device outputs a voice indicating the selected setting. Accordingly it is possible to vocally output only a setting required by a user. Because an unnecessary voice is not outputted, it is easy to distinguish necessary information.

An audio response remote control device according to the present invention comprises an input part, a transmission part transmitting a remote control signal, according to an input signal received from the input part, and an audio response part outputting a voice indicating a setting, according to the input signal outputted from the input part.

According to the audio response remote control device having the construction, when information is inputted to the input part by means of a push-button or the like, the transmission part transmits a remote control signal according to the input to the input part. The remote-controlled device receives the remote control signal sent from the transmission part of the remote control device. The operation of the remote-controlled device is controlled, based on the received remote control signal. The audio response part of the remote control device outputs a voice indicating a setting, according to the remote control signal. For example, in an air conditioner having a remote control unit serving as the remote control device and an indoor unit serving as the remote controlled device, the remote control unit vocally outputs settings such as an operation mode, a set temperature, a set air quantity, and the like as a voice, according to the remote control signal. Thus, in the case where one cannot a displayed content on a liquid crystal display part of the remote control unit in operating the remote control unit in the dark and in the case where a visually handicapped person or an eyesight-failed person has difficulty in visually confirming settings displayed on the liquid crystal display part, they can confirm the settings by means of the voice outputted from the remote control unit held at hand.

In one embodiment, the audio response remote control device further comprises an audio response selection portion for selecting a setting to be vocally outputted from the audio response part, and based on a content selected by the audio response selection part, the audio response part outputs a voice indicating the selected setting.

According to the audio response remote control device, the audio response selection part selects a setting to be outputted from the audio response part. The audio response part outputs a voice indicating the selected setting. Accordingly it is possible to vocally output only settings required by a user. Because an unnecessary voice is not outputted, it is easy to distinguish necessary information.

### BRIEF DESCRIPTION OF THE DRAWINGS

Fig. 1 is a schematic block diagram of an audio response remote control system of a first embodiment of the present invention;
Fig. 2 is a schematic block diagram of an audio response remote control system of a second embodiment of the present invention;
Fig. 3A is an illustration of an indoor unit of the audio response remote control system of the first embodiment and Fig. 3B is an illustration of a remote control unit of the audio response remote control system;
Fig. 4A is a front view of the remote control unit of the audio response remote control system shown in Fig. 1 in which a sliding cover of the remote control unit is closed, and Fig. 4B is a front view the remote control unit in which the sliding cover of the remote control unit is opened;
Fig. 5 is a flowchart for explaining a setting operation of the remote control unit;
Fig. 6 is a flowchart for explaining another setting operation of the remote control unit;
Fig. 7 is a flowchart for explaining still another setting operation of the remote control unit; and
Fig. 8 shows an audio response setting screen and an example of selected voice output.

### BEST MODE FOR CARRYING OUT THE INVENTION

Embodiments of the audio response remote control system and the audio response remote control device of the present invention will be described in detail below with reference to the drawings.

### (First Embodiment)

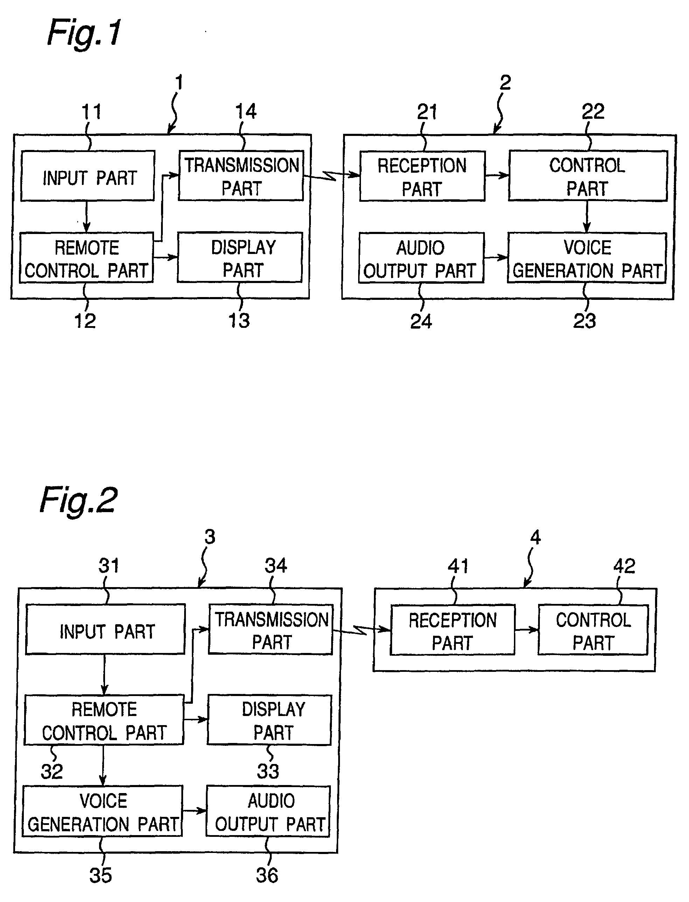

Fig. 1 is a schematic block diagram of an air conditioner according to a first embodiment of the audio response remote control system of the present invention. Reference numeral 1 denotes a remote control unit serving as a remote control device, and reference numeral 2 denotes an indoor unit serving as a remote-controlled device remotely controlled by the remote control unit 1. The remote control unit 1 has an input part 11 to which information is inputted by means of a push-button (not shown), a remote control part 12 including an audio response selection portion and operating in response to an input sent from the input part 11, a display part 13 displaying on a liquid crystal display based on a display signal sent from the remote control part 12, and a transmission part 14 transmitting a remote control signal sent from the remote control part 12.

The indoor unit 2 has a reception part 21 receiving the remote control signal sent from the remote control unit 1, a control part 22 controlling the operation of a body of the indoor unit 2, based on the remote control signal received by the reception part 21, a voice generation part 23 generating a voice based on a voice output signal sent from the control part 22, and an audio output part 24 outputting the voice, based on a voice signal generated by the voice generation part 23. The voice generation part 23 and the audio output part 24 constitute an audio response part.

Communication between the transmission part 14 of the remote control unit 1 and the reception part 21 of the indoor unit 2 is executed by means of light, radio waves, or the like.

In the audio response remote control system, a voice is outputted from the indoor unit 2, as shown, for example, in Fig. 3A.

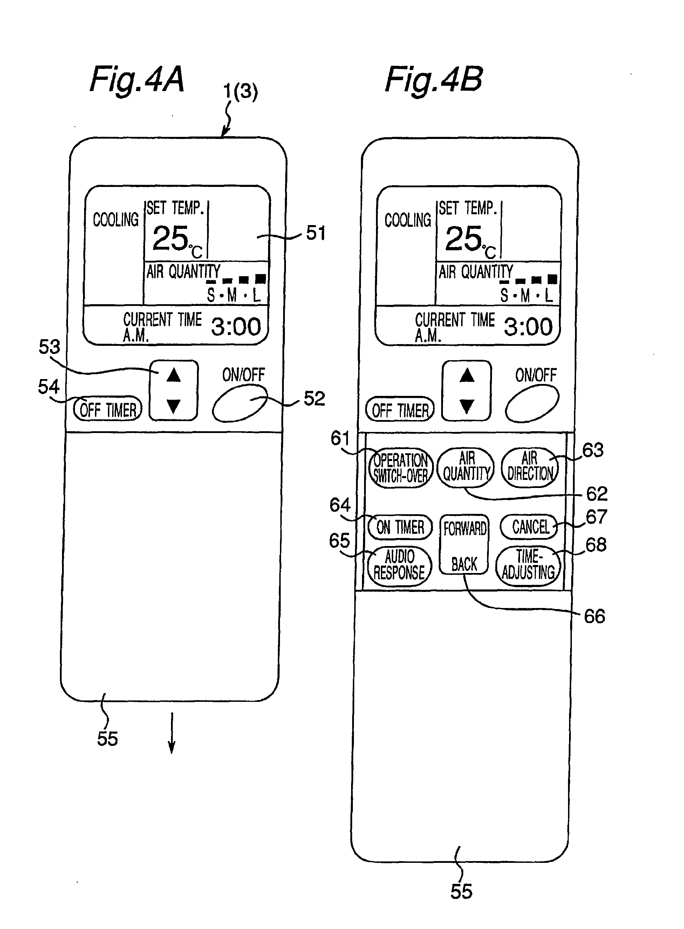

Figs. 4A and 4B show front views of the remote control unit 1 shown in Fig. 1, wherein Fig. 4A shows a state in which a sliding cover 55 is closed, while Fig. 4B shows a state in which the sliding cover 55 is opened.

In Fig. 4A, reference numeral 51 denotes a liquid crystal display, 52 denotes a "ON/OFF" button, 53 denotes a "up/down" button, 54 denotes an "off timer" button, and 55 denotes the sliding cover. In Fig. 4B, reference numeral 61 denotes an "operation switch-over" button, 62 denotes an "air quantity" button, 63 denotes an "air direction" button, 64 denotes an 'on timer" button, 65 denotes an "audio response" button, 66 denotes a "forward/backward" button, 67 denotes a "cancel" button, and 68 denotes a "time-adjusting" button.

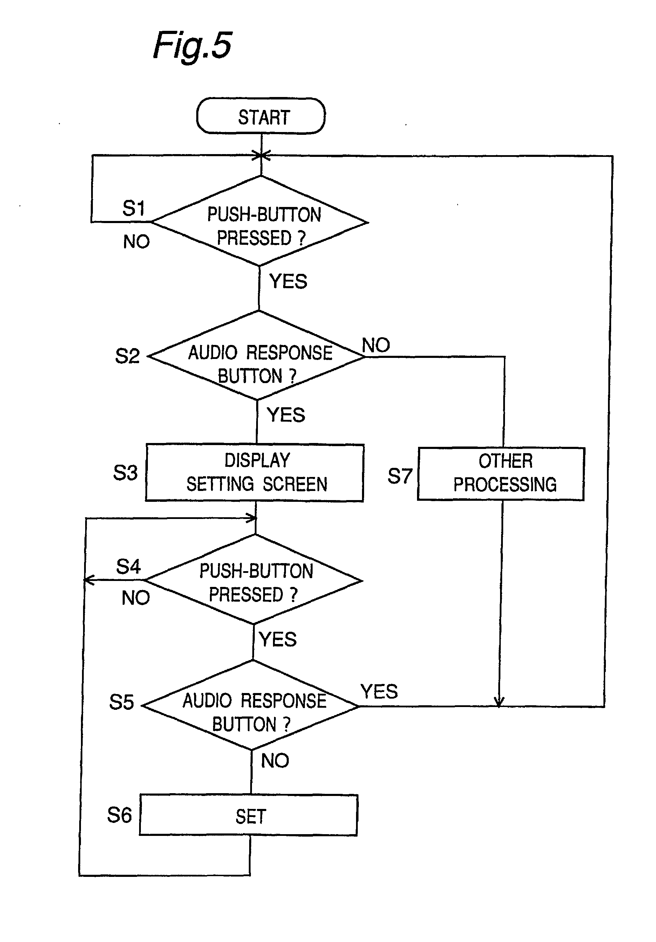

Fig. 5 is a flowchart for explaining an audio response setting processing that is executed in the remote control unit 1. The operation of the remote control unit 1 will be described below with reference to Fig. 5.

Initially, when processing starts, it is determined at step S1 whether a push-button has been pressed, namely whether there is an input entered through a push-button. If it is determined that no push-button has been pressed, the processing of step S1 is repeated. If it is determined that a push-button has been pressed, the program goes to step S2.

Then at step S2, it is determined whether the audio response button has been pressed. If it is determined that the audio response button has been pressed, the program goes to step S3. On the other hand, if it is determined that the audio response button has not been pressed, the program goes to step S7 at which other processing is executed. Then the program returns to step S1.

Thereafter at step S3, a setting screen is displayed on the liquid crystal display 51 (shown in Fig. 4A).

Thereafter the program goes to step S4 at which it is determined whether a push-button has been pressed. If it is determined that no push-button has been pressed, the processing of step S4 is repeated. If it is determined that a push-button has been pressed, the program goes to step S5.

Then at step S5, it is determined whether the audio response button has been pressed. If it is determined that the audio response button has been pressed, the program goes to step S1 because it is determined that audio response setting has been completed. On the other hand, if it is determined that the audio response button has not been pressed, the program goes to step S6.

Thereafter at step S6, a setting operation is performed according to the kind of the pressed button. Then the program returns to step S4 and steps S4 - S6 are repeated.

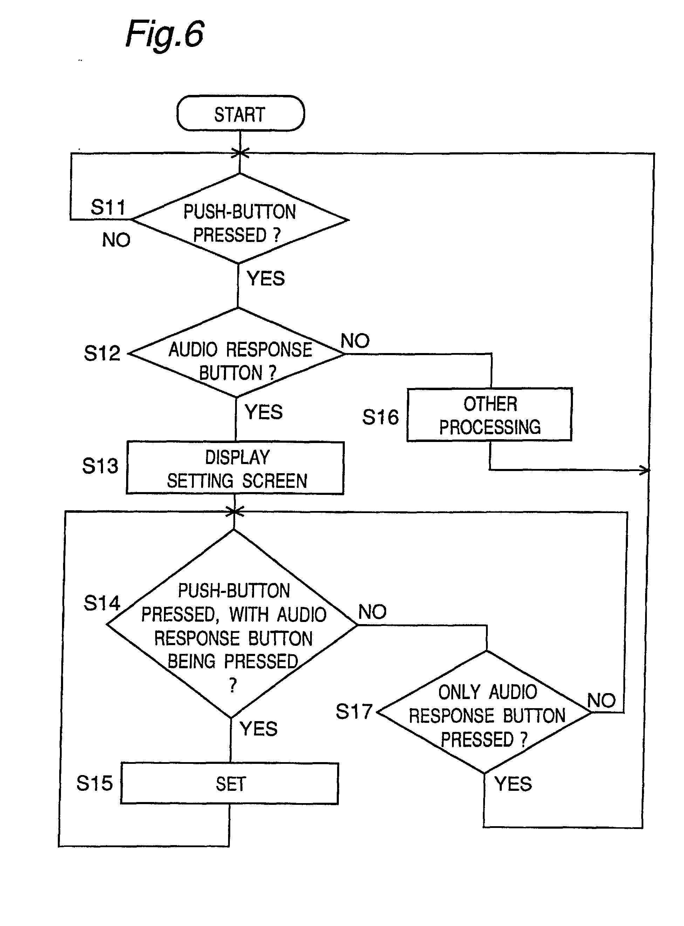

Fig. 6 is a flowchart for explaining another processing of audio response setting that is executed in the remote control unit 1. The operation of the remote control unit 1 will be described below with reference to Fig. 6.

Initially, when processing starts, it is determined, at step S11, whether a push-button has been pressed. If it is determined that no push-button has been pressed, the processing of step S11 is repeated. If it is determined that a push-button has been pressed, the program goes to step S12.

Then at step S12, it is determined whether the audio response button has been pressed. If it is determined that the audio response button has been pressed, the program goes to step S13. On the other hand, if it is determined that the audio response button has not been pressed, the program goes to step S16 at which other processing is executed and then returns to step S11.

Thereafter at step S13, a setting screen is displayed on the liquid crystal display 51 (shown in Fig. 4A).

Then the program goes to step S14 at which it is determined whether the push-button has been pressed, with the audio response button being pressed. If it is determined that the push-button has been pressed, with the audio response button being pressed, the program goes to step S15. On the other hand, if it is determined at step S14 that the push-button has not been pressed, with the audio response button being pressed, the program goes to step S17. Then at step S17, it is determined that only the audio response button has been pressed. If it is determined that only the audio response button has been pressed, the program returns to step S11.

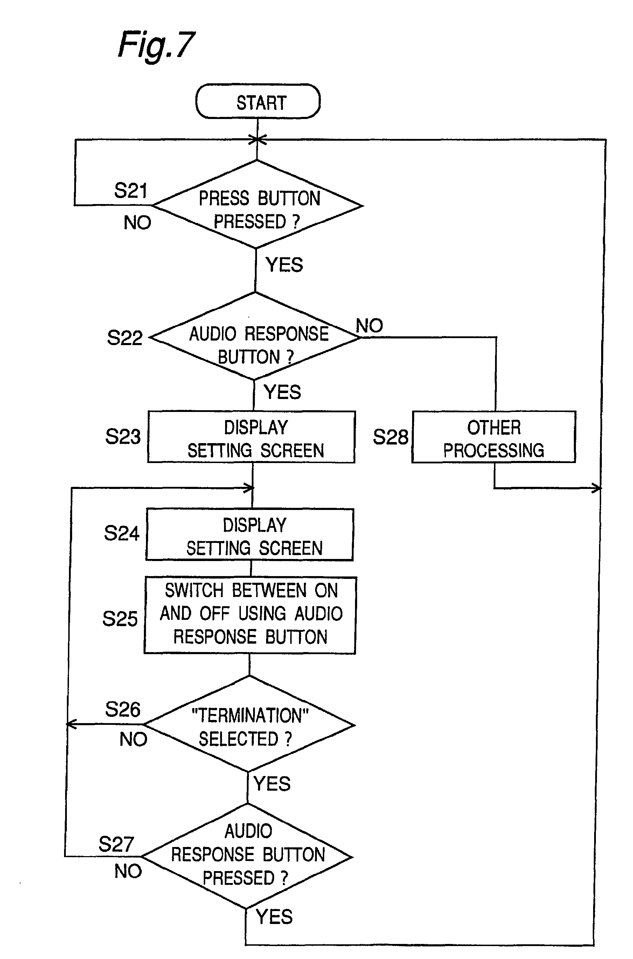

Fig. 7 is a flowchart for explaining still another processing of audio response setting that is executed in the remote control unit 1 shown in Fig. 1. The operation of the remote control unit 1 will be described below with reference to Fig. 7.

Initially, when processing starts, at step S21, it is determined whether a push-button has been pressed. If it is determined that no push-button has been pressed, the processing of step S21 is repeated. If it is determined that a push-button has been pressed, the program goes to step S22.

Then at step S22, it is determined whether the audio response button has been pressed. If it is determined that the audio response button has been pressed, the program goes to step S23. On the other hand, if it is determined that the audio response button has not been pressed, the program goes to step S28 at which other processing is executed. Then the program returns to step S21.

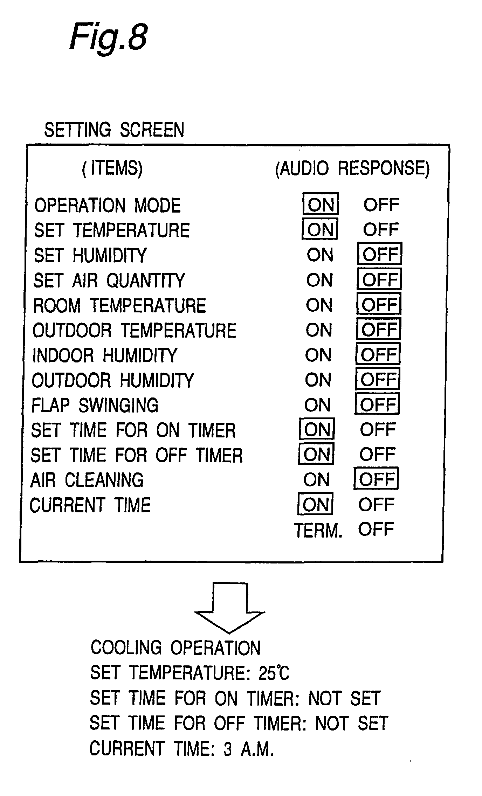

Thereafter at step S23, a setting screen as shown in Fig. 8 is displayed on the liquid crystal display 51 (shown in Fig. 4A).

Thereafter at step S24, a setting item is selected by the up/down button 53 (shown in Fig. 4A).

Thereafter at step S25, switching of ON/OFF is executed by the audio response button. That is, the set item selected at step S24 is switched from ON to OFF or from OFF to ON by pressing the audio response button.

Thereafter at step S26, it is determined whether "termination" has been selected. If it is determined that "termination" has been selected, the program goes to step S27. If it is determined that "termination" has not been selected, the program returns to step S24 and processing of steps S24 - S26 is executed again.

Then at step S27, it is determined whether the audio response button has been pressed. If it is determined that the audio response button has been pressed, the program returns to step S21. On the other hand, if it is determined that the audio response button has not been pressed, the program returns to step S24.

As shown in Fig. 8, setting items indicating pieces of operating information and corresponding audio response settings are displayed on the audio response setting screen. The setting items include an "operation mode" such as a heating operation, a cooling operation, or a dry operation, a "set temperature", a "set humidity", a "set air quantity", a "room temperature", an "outdoor temperature", an "indoor humidity", an "outdoor humidity", a "flap swinging state", a "set time for ON timer", a "set time for OFF timer", "air-cleaning", and a "current time". In the case where the "operation mode", the "set temperature", the "set time for ON timer", the "set time for OFF timer", and the "current time" are in an ON position or state on the audio response setting screen, the audio response is as shown in the lower side of Fig. 8.

As is obvious from the above, in the audio response remote control system, one can confirm the settings with the voice outputted from the indoor unit 2 even in the case where he or she cannot see a displayed content of the liquid crystal display 51 of the remote control unit 1 in operating the remote control unit 1 in the dark or in the case where he or she is a visually handicapped person or an eyesight-failed person having difficulty in confirming settings displayed on the liquid crystal display 51.

Also, only the settings and the information of operation that are required by a user are allowed to be vocally outputted from the indoor unit 2. Because an unnecessary voice is not outputted, it is easy to recognize necessary information.

### (Second Embodiment)

Fig. 2 is a schematic block diagram of an air conditioner using a remote control unit serving as the audio response remote control device of a second embodiment of the present invention. Reference numeral 3 denotes a remote control unit serving as the audio response remote control device. Reference numeral 4 denotes an indoor unit serving as a remote-controlled device to be remotely controlled by the remote control unit 3.

The remote control unit 3 has an input part 31 to which information is inputted by means of a push-button (not shown), a remote control part 32 including an audio response selection portion and operating based on input from the input part 31, a liquid crystal display part 33 displaying based on a display signal sent from the remote control part 32, a transmission part 34 outputting a control signal sent from the remote control part 32, a voice generation part 35 generating a voice, based on a voice output signal sent from the remote control part 32, and an audio output part 36 outputting a voice, based on a voice signal generated by the voice generation part 35. Except the voice generation part 35 and the audio output part 36, the remote control unit 3 has a construction similar to that of the remote control unit 1, shown in Figs. 4A and 4B, of the first embodiment.

The indoor unit 4 has a reception part 41 receiving the control signal from the remote control unit 3 and a control part 42 controlling a body of the indoor unit 4 based on the control signal received by the reception part 41.

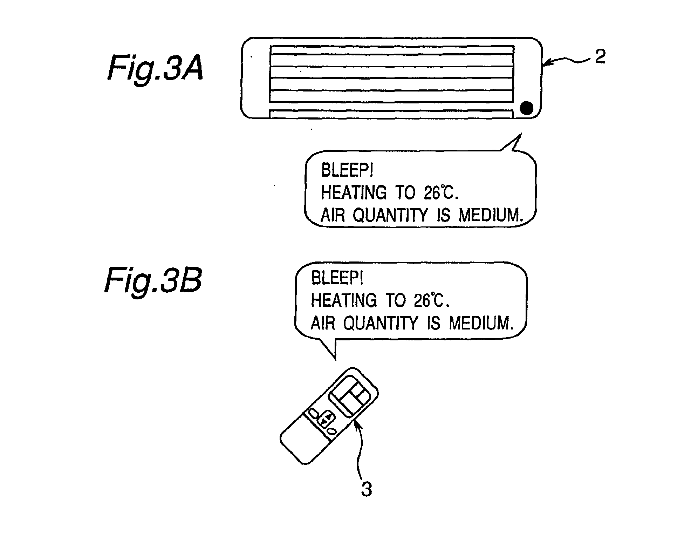

In the air conditioner, a voice is outputted from the remote control unit 3 as shown, for example, in Fig. 3B.

Thus, one can confirm the settings with the voice outputted from the remote control unit 3 even if he or she cannot see a displayed content of the liquid crystal display 51 (shown in Fig. 4A) of the remote control unit 3 in operating the remote control unit 3 in the dark or if he or she is a visually handicapped person or an eyesight-failed person having difficulty in confirming settings displayed on the liquid crystal display 51.

Also, only the settings and operational information that are required by a user are allowed to be vocally outputted from the remote control unit 3. Because an unnecessary voice is not outputted, it is easy to distinguish necessary information. Also, because voices are outputted from the remote control unit 3 close at hand, it is easy to recognize the settings.

In the embodiments, the air conditioner serving as the remote control system using the remote control device has been described. But the application of the present invention is not limited to the air conditioner but may be applied to any equipment having a remote control device remotely controlled by a remote control unit.

## Claims

1. An audio response remote control system comprising:
a remote control device (1); and
a remote-controlled device (2) remotely controlled by said remote control device (1),
wherein said remote control device (1) transmits a remote control signal according to an input, and
said remote-controlled device (2) is controlled by a received remote control signal and outputs a voice according to the remote control signal.

2. An audio response remote control system according to claim 1, wherein
said remote control device (1) has an input part (11) and a transmission part (14) transmitting a remote control signal according to an input to said input part (11), and
said remote-controlled device (2) has a reception part (21) receiving the remote control signal sent from said transmission part (14) of said remote control device (1), a control part (22) controlling an operation of said remote-controlled device (2), based on the remote control signal received by said reception part (21), and an audio response part (23, 24) outputting a voice indicating a setting, according to the remote control signal sent from said transmission part (14) of said remote control device (1).

3. An audio response remote control system according to claim 2, wherein
said remote control device (1) has an audio response selection part (12) for selecting a setting to be vocally outputted from said audio response part (23, 24) of said remote-controlled device (2), and
based on a content selected by said audio response selection part (12), said audio response part (23, 24) of said remote-controlled device (2) outputs a voice indicating the selected setting.

4. An audio response remote control device comprising:
an input part (31);
a transmission part (34) transmitting a remote control signal, according to an input signal received from said input part (31); and
an audio response part (35, 36) outputting a voice indicating a setting, according to said input signal outputted from said input part (31).

5. An audio response remote control device according to claim 4, further comprising:
an audio response selection portion (32) for selecting a setting to be vocally outputted from said audio response part (35, 36),
wherein based on a content selected by said audio response selection part (32), said audio response part (35, 36) outputs a voice indicating the selected setting.
